# EUROPEAN PATENT APPLICATION

(11) **EP 2 428 373 A1**
(43) Date of publication of application: **14.03.2012**
(21) Application number: 11175248.1
(22) Date of filing: 25.07.2011
(51) Int. Cl.: B60G 9/02

(54) **Axle arrangement**

(30) Priority: 14.09.2010 GB 1015301
(71) Applicant: AGCO International GmbH, 8212 Neuhausen am Rheinfall (CH)
(72) Inventor: Nagele, Guido, 87616 Marktoberdorf (DE)
(74) Representative: Smith, Louise Marie

(57) **Abstract**

A front rigid axle arrangement for an agricultural vehicle, wherein an axle is pivotally mounted to an axle carrier for movement about a first pivot axis allowing movement of the axle in a transverse vertical plane and wherein the axle is pivotable about a second axis for movement of the axle in a vertical plane. The first and second pivot axes are parallel to each other. The axle is provided with at least two dampers which control movement of the axle both in a vertical plane and a transverse vertical plane.

## Description

This invention relates to a rigid axle arrangement for an agricultural vehicle. More specifically it relates to a rigid axle arrangement of a front drive swing axle on an agricultural tractor.

Agricultural tractors are typically equipped with front swing axles which are provided with steerable wheels. To guarantee maximum ground contact with the wheels when driving over uneven ground the front axle body is supported in pivot bearings on the vehicle chassis.

EP0754576 discloses a front rigid axle arrangement comprising an axle and an axle carrier. The carrier is pivotally mounted to a chassis of a vehicle which allows movement of the axle in a vertical plane. The axle is connected to the frame by a swivel pin which allows movement of the axle about a longitudinal axis in a vertical transverse plane, or roll. A single damper is fitted between the carrier and the chassis to control movement of the axle arrangement in a vertical plane. The damper does not control the roll of the axle. Stops are provided on the front of the frame to limit the roll of the axle but they do not allow the roll of the vehicle to be controlled and so roll can still affect the steering/driving of the vehicle.

EP1861738 discloses a front rigid axle in which the axle is connected to one end of a cardan shaft case, the other end of the cardan shaft case is pivotally mounted to the chassis of a vehicle by a swivel housing. The roll of the axle is controlled by the pivotal means and swivel housing on the cardan shaft. The chassis is sprung in relation to the axle by two suspension cylinders wherein forces acting laterally on the axle (roll) are transmitted to the chassis through a horizontal control arm located on the front of the chassis.

The control arm has a central cut-out portion to make room for a pivot pin which may be used as a pivotal connection to connect the axle to the chassis. Due to space requirements on front mounted installations the material of the control arm around this pin is thin and therefore only suitable for small range tractors having low load requirements. The suspension system shown in EP1661738 is not suitable for tractors having heavy load requirements such as high range tractors over 150 horse power.

The object of the present invention is to provide an improved axle arrangement for controlling both vehicle roll and vertical movement of the axle with respect to the chassis.

According to the invention, there is provided a front rigid axle arrangement as claimed in claim 1. Preferred features of the arrangement are set out in the dependent claims.

The invention will now be described by way of example only with reference to the following drawings in which:
Figure 1 is a perspective view of the axle assembly from the rear side of the axle in accordance with the invention,
Figure 2 is a perspective view of the axle assembly of figure 1 with the chassis removed,
Figure 3 is a perspective view of the axle assembly of figure 1 with the chassis and part of the axle carrier removed
Figure 4 is the perspective view of figure 1 showing the features of the assembly located under the chassis,
Figures 5a and 5b are rear views of the axle assembly in which the features of the assembly under the chassis are shown and not shown respectively, and
Figure 5c is a side end view of the assembly.

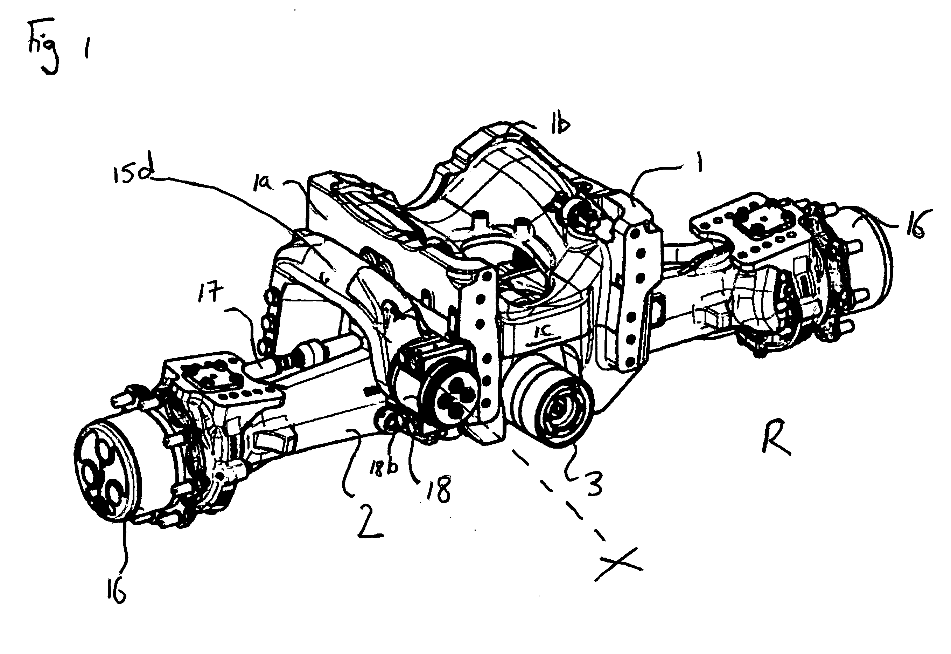

In each of figures 1 to 5c, the same features are identified with the same reference numerals.

Figure 1 is a perspective view of part of a longitudinal frame 1 of a vehicle chassis of a tractor which is fitted with a front steerable drive rigid axle 2 fitted to the front of frame 1. In figure 1 the rear face R of the axle can be seen. The opposing face of the axle, the front face F is not shown in figure 1. The drive axle 2 comprises a single rigid body which is aligned transverse to the longitudinal axis of the frame 1 and is provided with wheel hubs 16. The axle assembly is provided with steering rods 17. Axle 2 is connected to a cardan shaft 3 which extends longitudinally to the rear of the frame. The frame 1 is H-shaped in cross section and comprises two spaced rods 1 a and 1 b which are joined together at, or around their mid-points by mid-point frame member 1c. At the front of the frame 1 the two rods 1a and 1b each comprise an arch through which the axle 2 is positioned.

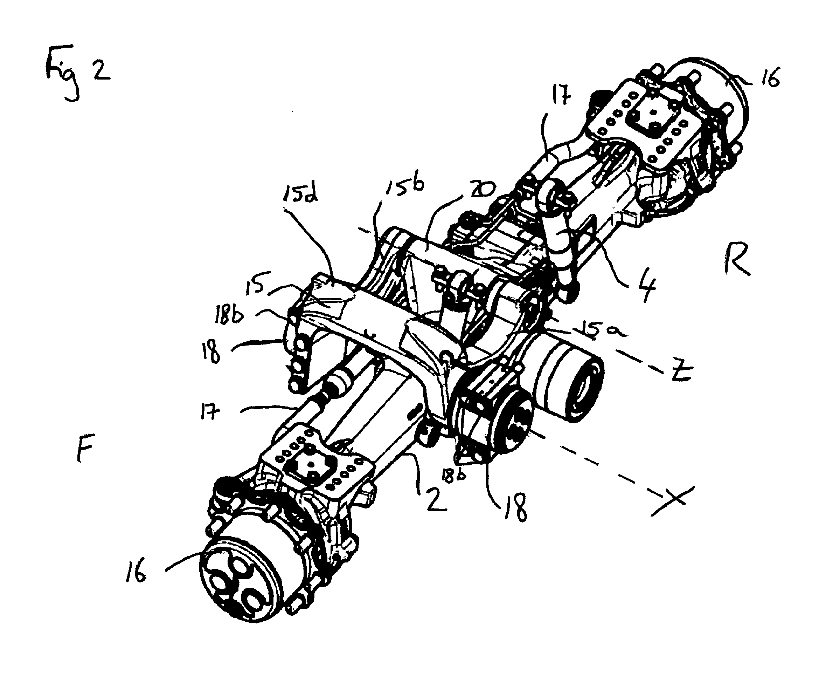

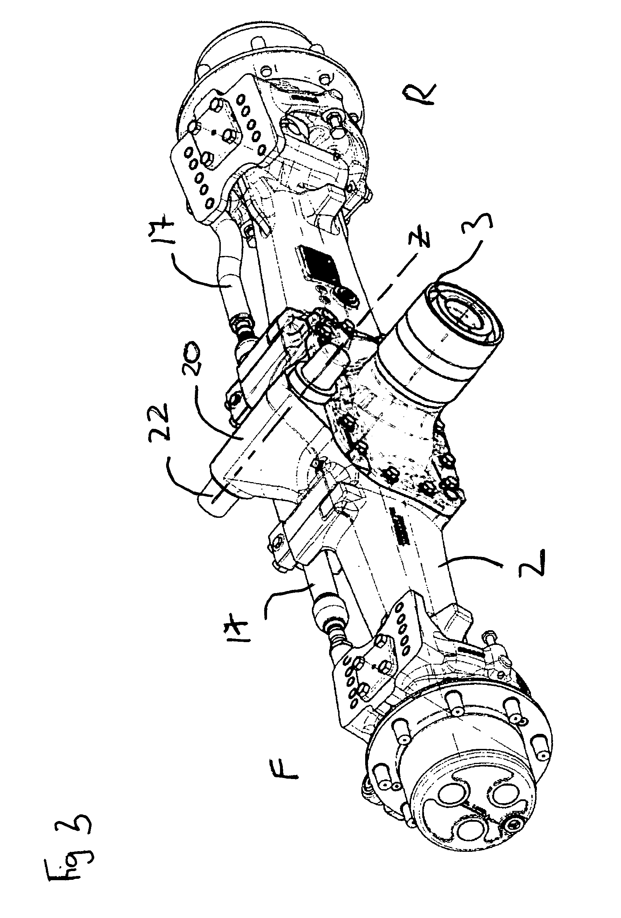

The axle 2 is attached to the frame 1 by an axle carrier 15. Figures 2, 4 and 5a show the axle carrier 15 more clearly. Axle carrier 15 is positioned to one side of the frame 1 and comprises two opposing arms 15a, 15b which extend along the front and rear faces of the axle 2 respectively. The axle carrier further comprises a shaft 22 which extends through a bore in axle protrusion 20 which is shown more clearly in figure 3. The axle protrusion 20 may be integrally cast with the axle, or may be a separate part connected to the axle. The bore extends from the front face F of the axle to the rear face R of the axle transverse to the longitudinal axis of the axle. The arms 15a, 15b are each provided at one end with two opposing stubs (not visible in the drawings) which protrude outwards away from the front and rear faces of the axle along the X-axis marked by the broken line Pivot bearings 18 are attached to each stub. Pivot bearings 18 are connected to rod 1 a of the frame 1 by bolts 18b. The front pivot bearing being connected by two bolts 18b and the rear pivot bearing being connected by four bolts 18b. The other ends of arms 15a, 15b are connected to shaft 22.

Shaft 22 projects along the Z- axis transverse to the longitudinal axis of the axle 2 and permits vertical transverse movement, or roll movement of the axle 2 about the Z-axis.

Arms 15a and 15b are connected to the frame 1 by pivot bearings 18 which allow the arms to pivot about the X-axis. X-axis is transverse to the longitudinal axis of the axle 2 and is parallel to the Z-axis. Movement of arms 15a, 15b causes movement of axle 2 in a vertical plane.

A support arm 15d extends over axle 2 connecting the arms 15a, 15b on the front and rear faces of the axle. The support arm 15d gives support and stability to the carrier 15.

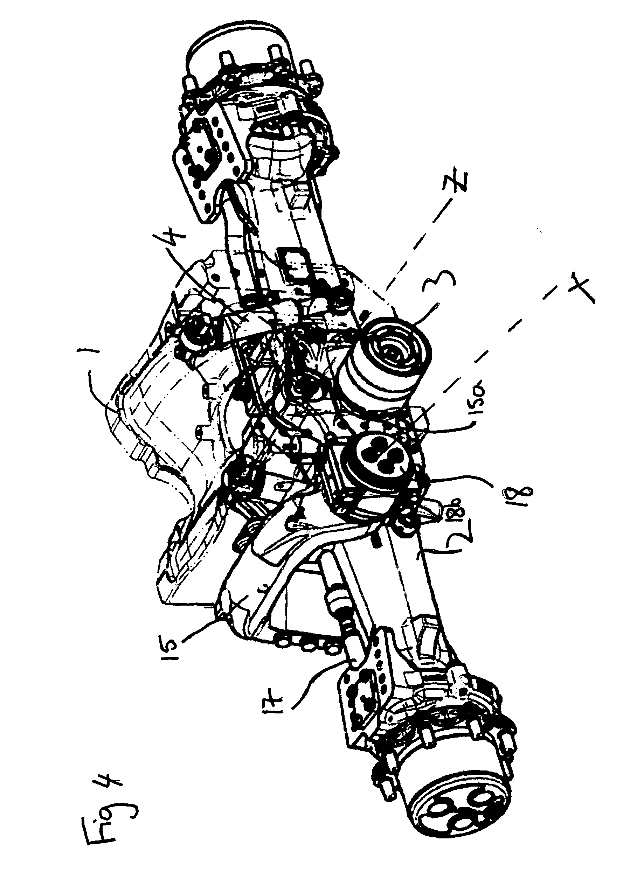

ln figure 4, part of the front of the frame 1 is cut away showing the position of the arms 15a, 15b which would normally be covered from view under frame 1.

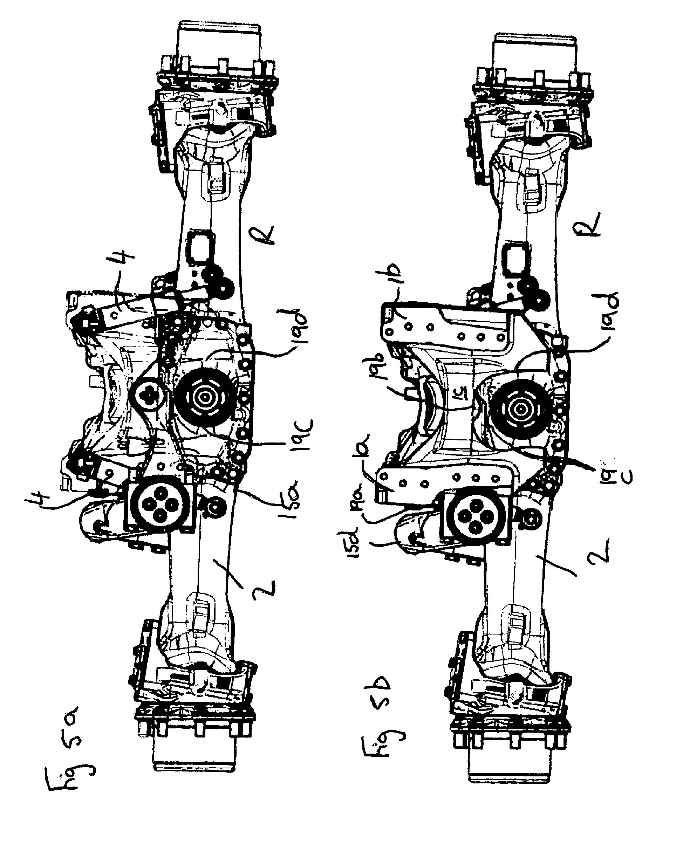

Figures 5a and 5b are views of the axle arrangement from the rear side of the axle showing the position of the arms 15a, 15b more clearly.

ln figure 5b, stop 19a can be seen positioned on rod 1a. The stop 19a which may for example comprise rubber, limits the movement of the axle carrier 15 in a clockwise rotation (as viewed from the rear face R of the axle) about the X-axis when carrier support arm 15d comes into contact with it. During anticlockwise rotation, the movement of the carrier 15 is limited by a bottom contour 19b of mid point frame member 1c coming into contact with cardan shaft 3. Stops 19a and 19b therefore limit movement of the axle 2 in a vertical plane. The roll movement of axle 2 is limited by cardan shaft 3 coming into contact with contours 19c and 19d of rods 1 a and 1b respectively.

Two hydraulic dampers 4 suspend the axle 2 from suspension points 5a and 5b high up on rods 1 a and 1 b respectively. The dampers 4 are attached directly to the axle to the rear facing sides of the axle 2. With this arrangement the two dampers control movement of the axle 2 both in a transverse vertical plane ad vertical plane. Rather than having two arrangements for controlling of the axle in each rolling and vertical movement, the damper arrangement described allows both movements to be controlled, thus reducing the cost, weight and space required for a further assembly/control means.

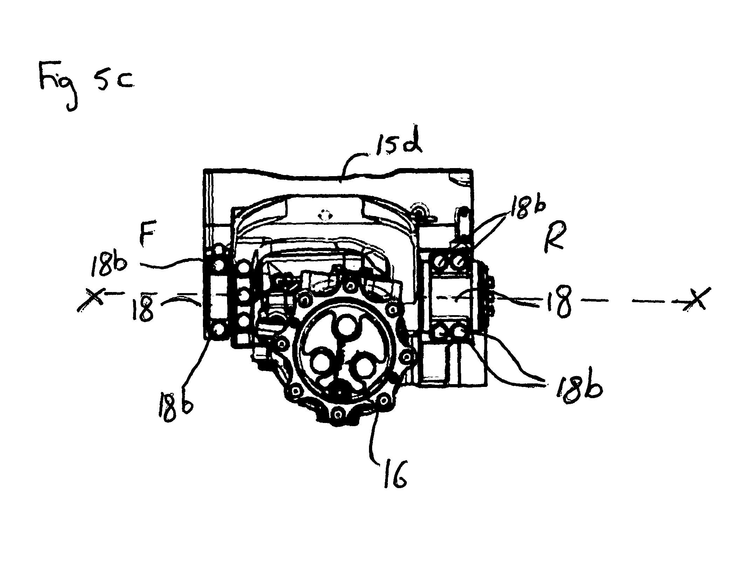

Figure 5c shows a side view of the axle assembly showing the position of the front and rear pivot bearings 18.

The axle arrangement described allows the roll of the vehicle to be easily controlled. This is important as tractors which can travel at high speeds can become very unstable and therefore dangerous if roll cannot be controlled. Tractors and agricultural vehicles can be adapted with the axle assembly described relatively simply

## Claims

1. A front rigid axle arrangement for an agricultural vehicle, wherein an axle is pivotally mounted to an axle carrier for movement about a first pivot axis allowing movement of the axle in a transverse vertical plane and wherein the axle is pivotable about a second axis for movement of the axle in a vertical plane, the first and second pivot axes being parallel to each other, **characterised in that** the axle is provided with at least two dampers which control movement of the axle both in a vertical plane and a transverse vertical plane.

2. A front rigid axle arrangement as claimed in any preceding claim wherein the axle carrier is mounted to a side of a chassis of the vehicle.

3. A front rigid axle arrangement as claimed in any preceding claim wherein the dampers extend from two opposing sides of the chassis.

4. A front rigid axle arrangement as claimed in any preceding claim wherein the dampers are connected directly to the axle.

5. A front rigid axle arrangement as claimed in any preceding claim wherein the dampers are connected to a rear facing side of the axle.

6. A front rigid axle arrangement as claimed in any preceding claim wherein the dampers comprise hydraulic cylinders.
